# EUROPÄISCHE PATENTSCHRIFT

(11) **EP 3 788 281 B1**
(45) Veröffentlichungstag und Bekanntmachung des Hinweises auf die Patenterteilung: **15.02.2023**
(21) Anmeldenummer: 19710656.0
(22) Anmeldetag: 11.03.2019
(51) Int. Cl.: F16J 15/34

(54) **WARTUNGSFREUNDLICHE GLEITRINGDICHTUNG**
EASY-MAINTENANCE SLIP RING SEAL
ENSEMBLE D'ÉTANCHÉITÉ À BAGUES DE GLISSMENT FACILE À ENTRETENIR

(30) Priorität: 30.04.2018 DE 102018206652
(43) Veröffentlichungstag der Anmeldung: 10.03.2021
(73) Patentinhaber: EagleBurgmann Germany GmbH & Co. KG, 82515 Wolfratshausen (DE)
(72) Erfinder: DRÖSCHER, Peter, 82538 Geretsried (DE); STEIGENBERGER, Hans, 82547 Eurasburg (DE)
(74) Vertreter: Hoefer & Partner Patentanwälte mbB
(86) Internationale Anmeldenummer: PCT/EP2019/055968
(87) Internationale Veröffentlichungsnummer: WO 2019/211030

(56) Entgegenhaltungen:
- EP-A1- 0 177 161

## Beschreibung

Die vorliegende Erfindung betrifft eine wartungsfreundliche Gleitringdichtung, bei der ein Austausch von Gleitringen schnell und einfach möglich ist. Insbesondere betrifft die vorliegende Erfindung Gleitringdichtungen zur Abdichtung bei sehr großen Wellen, insbesondere mit einem Durchmesser von größer oder gleich 0,5 m, insbesondere bei Maschinen in Kraftwerken, wobei die abzudichtende Welle vertikal angeordnet ist.

Gleitringdichtungen sind aus dem Stand der Technik in unterschiedlichen Ausgestaltungen bekannt. Ein Anwendungsgebiet derartiger Gleitringdichtungen ist beispielsweise in Kraftwerken zur Abdichtung von Pumpen oder Turbinen oder dgl. Hierbei müssen Wellendurchmesser zwischen 0,5 m bis über 1 m abgedichtet werden. Aufgrund dieser großen Durchmesser ergibt sich zwangsweise, dass die Gleitringdichtungen ein sehr großes Gewicht aufweisen. Um eine einfache Montage zu ermöglichen, sind daher bisher die Gleitringe und Gleitringträger und Gehäuseteile mehrteilig ausgeführt. Aufgrund der Mehrteiligkeit ergibt sich bei der Montage ein erhöhter Montagebedarf, da die Einzelteile jeweils vor Ort zusammengebaut werden müssen. Dies gilt ebenfalls bei einem notwendigen Austausch der Gleitringe, da durch die Mehrteiligkeit aller Bauteile der Demontagebedarf stark ansteigt. Dies führt jedoch zu ungewollten Stillstandszeiten in den Kraftwerken, wobei Kraftwerksbetreiber hier ein großes Interesse haben, die Stillstandszeiten möglichst gering zu halten. Ferner ist aus der EP 0 177 161 A1 eine Gleitringdichtungsanordnung mit einer Gleitringdichtung bekannt, welche einen Gleitringträger, einen Haltering und ein Gehäuse aufweist. Ein Deckel zu einem Schutz der Gleitringdichtung ist dabei nicht vorgesehen.

Es ist daher Aufgabe der vorliegenden Erfindung, eine Gleitringdichtungsanordnung, insbesondere zur Verwendung zur Abdichtung bei sehr großen Wellen, bereitzustellen, welche bei einfachem Aufbau und einfacher, kostengünstiger Herstellbarkeit eine schnelle Montage und auch Demontage ermöglicht. Ferner ist es Aufgabe der vorliegenden Erfindung, eine Maschine, insbesondere eine Pumpe oder eine Turbine, mit einem großen Wellendurchmesser von insbesondere größer oder gleich 0,5 m mit einer erfindungsgemäßen Gleitringdichtungsanordnung bereitzustellen.

Diese Aufgabe wird durch eine Gleitringdichtungsanordnung mit den Merkmalen des Anspruchs 1 und eine Maschine mit den Merkmalen des Anspruchs 10 gelöst. Die Unteransprüche zeigen jeweils bevorzugte Weiterbildungen der Erfindung.

Die erfindungsgemäße Gleitringdichtungsanordnung mit den Merkmalen des Anspruchs 1 weist dabei den Vorteil auf, dass eine Montage wie auch eine Demontage sehr einfach und schnell möglich ist. Insbesondere bei einer Demontage muss nur ein Teil der Bauteile der Gleitringdichtung demontiert werden und ein Austausch der Gleitringe kann durchgeführt werden. Somit ist die erfindungsgemäße Gleitringdichtungsanordnung sehr wartungsfreundlich und kann insbesondere nachfolgende Kosten reduzieren, da ein Gleitringaustausch nach einer gewissen Laufzeit notwendig sein kann. Dies wird erfindungsgemäß dadurch erreicht, dass die Gleitringdichtungsanordnung eine Gleitringdichtung mit einem rotierenden und einem stationären Gleitring aufweist, welche zwischen ihren Gleitflächen einen Dichtspalt definieren. Ferner ist ein Gleitringträger vorgesehen, welcher den stationären Gleitring hält. Der Gleitringträger ist einteilig und ringförmig ausgebildet. Darüber hinaus ist ein einteiliger und ringförmiger Deckel, welcher am Gleitringträger angeordnet ist, vorgesehen. Ein einteiliges und ringförmiges Gehäuse ist ferner lösbar mittels einer Fixiereinrichtung am Deckel befestigt. Ferner ist ein einteiliger erster Haltering vorgesehen, welcher lösbar am Gleitringträger angeordnet ist. Der stationäre Gleitring ist dabei zwischen dem ersten Haltering und dem Gleitringträger geklemmt. Weiterhin ist der Gleitringträger mittels wenigstens eines elastischen Vorspannelements derart mit dem Deckel verbunden, dass der Gleitringträger mitsamt dem stationären Gleitring Bewegungen in Axialrichtung der Gleitringdichtung ausführen kann. Dadurch können Wellenstöße oder dgl. durch die Gleitringdichtung ausgeglichen werden, ohne dass es hierbei zu Beschädigungen an den Gleitflächen der Gleitringe kommt.

Ferner ist ein maximaler Außendurchmesser des Deckels kleiner als ein minimaler Innendurchmesser des Gehäuses. Hierdurch wird sichergestellt, dass eine axiale Verschiebbarkeit des Gehäuses gegenüber dem Deckel möglich ist, um eine einfache und schnelle Demontage bzw. Montage zu ermöglichen.

Vorzugsweise umfasst die Fixiereinrichtung eine Scheibe und einen Schraubbolzen, wobei die Scheibe durch einen Durchgangsschlitz im Gehäuse hindurchgeführt ist und in einen nutförmigen Schlitz im Deckel eingeführt ist und mittels des Schraubbolzens fixiert ist. Dadurch ist eine einfache und schnell lösbare und wieder anbringbare Fixierung des ringförmigen Gehäuses am ringförmigen Deckel möglich. Die Fixiereinrichtung umfasst dabei weiter bevorzugt wenigstens einen Sicherungsbolzen, mit welchem die Scheibe am ringförmigen Gehäuse gesichert ist. Vorzugsweise sind entlang des Umfangs des ringförmigen Gehäuses mehrere Fixiereinrichtungen angeordnet.

Gemäß einer weiteren bevorzugten Ausgestaltung der vorliegenden Erfindung weist der stationäre Gleitring einen radial nach außen vorstehenden und in Umfangsrichtung vollständig umlaufenden Klemmbereich auf. Am Klemmbereich ist der stationäre Gleitring dabei zwischen dem ersten Haltering und dem Gleitringträger geklemmt.

Weiter bevorzugt ist der rotierende Gleitring zwischen einer Wellenhülse, welche an der abzudichtenden Welle angeordnet ist, und einem zweiten Haltering geklemmt. Bevorzugt weist der rotierende Gleitring einen radial nach außen vorstehenden und in Umfangsrichtung vollständig umlaufenden Klemmbereich auf, an welchem der rotierende Gleitring zwischen dem zweiten Haltering und der Wellenhülse geklemmt ist. Die Wellenhülse ist dabei im Schnitt vorzugsweise U-förmig und nimmt zwischen ihren Schenkeln den rotierenden Gleitring zumindest teilweise auf.

Vorzugsweise sind die Klemmbereiche des rotierenden und/oder stationären Gleitrings zwischen zwei O-Ringen geklemmt. Hierdurch wird eine Beschädigung der Klemmbereiche der Gleitringe durch den Klemmvorgang vermieden, da die O-Ringe eine elastische Deformation beim Klemmvorgang ausführen und so die Klemmbereiche und damit die Gleitringe schützen.

Eine besonders kostengünstige und montagefreundliche und demontagefreundliche Ausgestaltung ist gegeben, wenn das ringförmige Gehäuse vorzugsweise als Hohlzylinder ausgebildet ist.

Vorzugsweise weist der rotierende Gleitring an einer Seitenfläche einen Klemmbereich auf, welcher in Umfangsrichtung vollständig umlaufend von dem Seitenbereich vorsteht. Am Klemmbereich ist ein erster und zweiter O-Ring aus einem elastischen Material angeordnet. Der erste und zweite O-Ring dienen hierbei als Lagerstellen für den rotierenden Gleitring, so dass der rotierende Gleitring elastisch gelagert ist. Hierbei ist der erste O-Ring mit einem rotierenden Bauteil, insbesondere einer Wellenhülse, in Verbindung. Der zweite O-Ring ist mit einem separaten Bauteil, insbesondere einem Haltering, verbunden.

Weiter bevorzugt ist der stationäre Gleitring gleich wie der rotierende Gleitring mit einem Klemmbereich aufgebaut. Auch hierbei dichtet ein erster O-Ring an einem Deckel ab und ein zweiter O-Ring an einem Haltering.

Der Klemmbereich am rotierenden Gleitring und/oder der Klemmbereich am stationären Gleitring sind vorzugsweise an einem Bereich der Seitenfläche angeordnet, welche näher zu einer Rückseite des Gleitrings liegt als zu einer Gleitfläche. Vorzugsweise liegt der Klemmbereich am rotierenden und/oder stationären Gleitring jeweils in einem Bereich einer Hälfte, bevorzugt einem Drittel, der Länge des Gleitrings in Axialrichtung, ausgehend von der Gleitfläche des Gleitrings, die vom Dichtspalt der Gleitringdichtung abgewandt ist.

Weiter bevorzugt sind die elastischen Vorspannelemente eine Vielzahl von Federn.

Weiter bevorzugt ist die Gleitringdichtungsanordnung vertikal ausgerichtet, d.h. die Gleitringdichtungsanordnung dichtet an einer vertikal angeordneten Welle ab.

Ferner betriff die vorliegende Erfindung eine Maschine, insbesondere eine Pumpe oder eine Turbine, mit einer abzudichtenden Welle mit einem Durchmesser von größer oder gleich 0,5 m und einer erfindungsgemäßen Gleitringdichtungsanordnung. Die Welle der Maschine ist dabei bevorzugt vertikal angeordnet.

Nachfolgend wir unter Bezugnahme auf die begleitende Zeichnung ein Ausführungsbeispiel der Erfindung im Detail beschrieben. In der Zeichnung ist:
- Fig. 1: eine schematische Schnittansicht einer Gleitringdichtungsanordnung gemäß einem Ausführungsbeispiel der Erfindung,
- Fig. 2: eine vergrößerte Teilschnittansicht der Gleitringdichtungsanordnung von Fig. 1,
- Fig. 3: eine schematische, perspektivische Schnittansicht der Gleitringdichtungsanordnung von Fig. 1,
- Fig. 4: eine schematische Draufsicht der Gleitringdichtungsanordnung von Fig. 1 in Axialrichtung,
- Fig. 5: eine schematische Schnittansicht einer Fixiereinrichtung zwischen Deckel und Gehäuse, und
- Fig. 6: eine schematische Schnittdarstellung eines Demontagevorgangs der Gleitringdichtungsanordnung von Fig. 1.

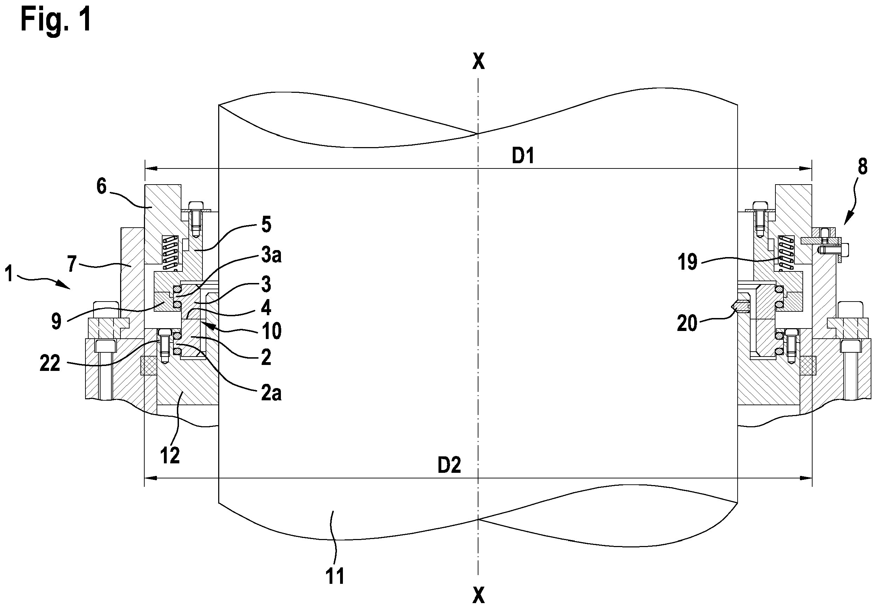

Nachfolgend wird unter Bezugnahme auf die Fig. 1 bis 6 eine Gleitringdichtungsanordnung 1 gemäß einem ersten bevorzugten Ausführungsbeispiel der Erfindung im Detail beschrieben.

Wie schematisch aus Fig. 1 ersichtlich ist, dichtet die Gleitringdichtungsanordnung 1 an einer Welle 11 ab. Die Welle 11 ist dabei in vertikaler Richtung angeordnet. Somit ist auch eine Mittelachse X-X der Gleitringdichtungsanordnung 1 in vertikaler Richtung ausgerichtet.

Die Gleitringdichtungsanordnung 1 umfasst eine Gleitringdichtung 10 mit einem rotierenden Gleitring 2 und einem stationären Gleitring 3, welche zueinander gerichtete Gleitflächen aufweisen und zwischen denen ein Dichtspalt 4 definiert ist. Wie aus Fig. 1 ersichtlich ist, ist der rotierende Gleitring 2 dabei auf einer Wellenhülse 12 angeordnet, welche direkt auf einer Welle 11 mittels einer Vielzahl von Wurmschrauben 20 fixiert ist.

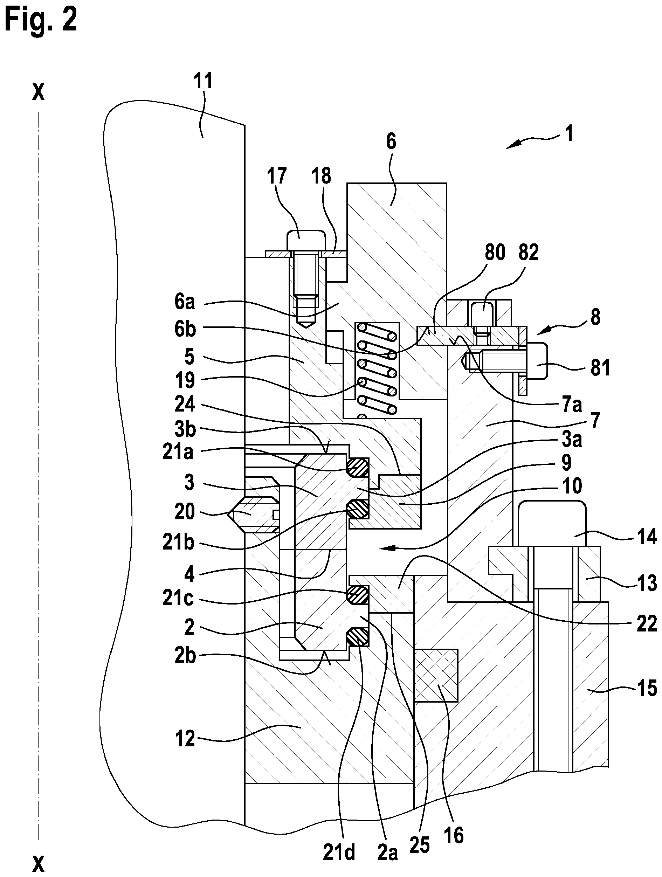

Der stationäre Gleitring 3 ist mittels eines einteiligen, ringförmigen Gleitringträgers 5 gehalten. Am Gleitringträger 5 ist ein einteiliger, ringförmiger Deckel 6 angeordnet. Weiter umfasst die Gleitringdichtungsanordnung ein einteiliges, ringförmiges Gehäuse 7. Das Gehäuse 7 ist lösbar mittels einer Fixiereinrichtung 8 am Deckel 6 fixiert (vgl. Figur 2).

Somit umfasst die Gleitringdichtungsanordnung 1 drei einteilige, ringförmige Bauteile, nämlich den Gleitringträger 5, den Deckel 6 und das Gehäuse 7. Durch die einteilige, ringförmige Ausgestaltung dieser drei Bauteile ist eine Montage und auch eine Demontage aufgrund der reduzierten Teileanzahl einfach und sicher möglich.

Wie aus Fig. 1 ersichtlich ist, ist hierbei ein maximaler Außendurchmesser D1 des Deckels 6 kleiner als ein minimaler Innendurchmesser D2 des Gehäuses 7. Hierdurch ist eine axial teleskopierbare Anordnung zwischen dem Deckel 6 und dem Gehäuse 7 gegeben.

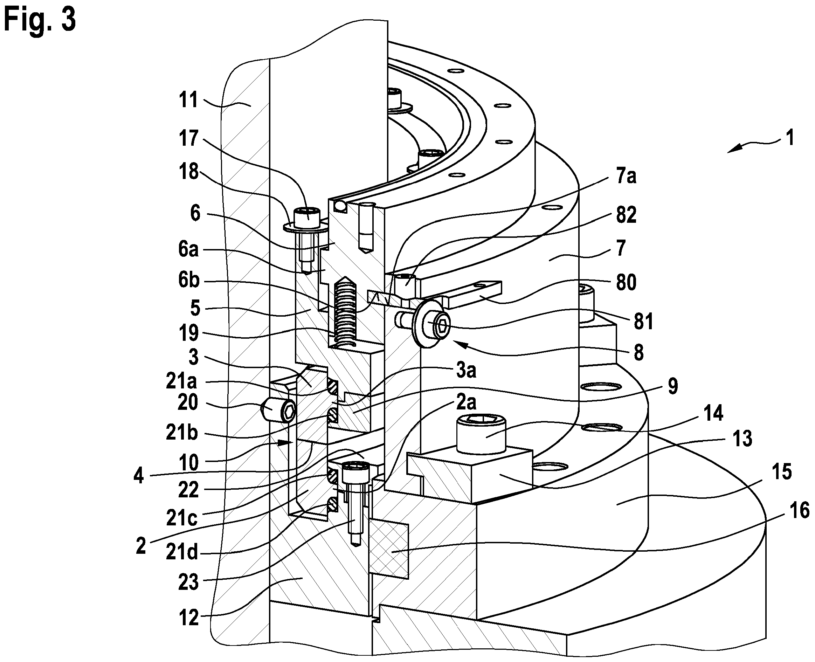

Wie insbesondere aus den Fig. 2 und 3 ersichtlich ist, ist zwischen dem Deckel 6 und dem Gehäuse 7 eine Vielzahl von Vorspannelementen 19 in Form von Zylinderfedern vorgesehen. Die Zylinderfedern spannen dabei den stationären Gleitring 3 gegen den rotierenden Gleitring 2 vor. Ferner ermöglichen die Vorspannelemente 19 dabei bei Wellenausschlägen eine Bewegung des stationären Gleitrings 3 mitsamt dem Gleitringträger 5 in Richtung der Mittelachse X-X auf den Deckel 6 zu, um derartige Wellenbewegungen auszugleichen.

Um hierbei eine Beschädigung der Bauteile zu vermeiden, ist am Gleitringträger 5 ein Anschlag vorgesehen. Der Anschlag umfasst eine Vielzahl von Anschlagbolzen 17 mit Anschlagscheiben 18, welche eine Axialbewegung in Verbindung mit einem am inneren Umfang umlaufenden Vorsprung 6a am Deckel 6 begrenzen.

Wie weiter insbesondere aus Fig. 3 ersichtlich ist, ist der stationäre Gleitring 3 mittels eines einteiligen, ersten Halterings 9 lösbar am Gleitringträger 5 befestigt.

Um eine sichere Befestigung zu ermöglichen, weist der stationäre Gleitring 3 einen Klemmbereich 3a auf, welcher an einer Seitenfläche des stationären Gleitrings 3 ringförmig umlaufend vorgesehen ist. Der Klemmbereich 3a ist näher zu einer Rückseite 3b des stationären Gleitrings 3 angeordnet. Hierbei ist der Klemmbereich 3a im geklemmten Zustand zwischen einem ersten O-Ring 21a am Gleitringträger 5 und mittels eines zweiten O-Rings 21b am ersten Haltering 9 geklemmt. Ein Spalt 24 zwischen dem Gleitringträger 5 und dem ersten Haltering 9 führt dabei zum Klemmbereich 3a.

In gleicher Weise weist auch der rotierende Gleitring 2 einen Klemmbereich 2a auf, welcher an einem radialen Außenumfang vorsteht und in Umfangsrichtung vollstehend umlaufend ausgebildet ist. Der Klemmbereich 2a des rotierenden Gleitrings 2 ist ebenfalls zwischen zwei O-Ringen 21c, 21d geklemmt. Hierbei liegt der O-Ring 21c an einem zweiten Haltering 22 an und der O-Ring 21d an der Wellenhülse 12. Ein Spalt 25 führt zum Klemmbereich 2a des rotierenden Gleitrings.

Wie insbesondere aus Fig. 2 ersichtlich ist, ist auch am rotierenden Gleitring 2 der Klemmbereich 2a näher an einer Rückseite 2b des rotierenden Gleitrings 2 als an einer Gleitfläche des rotierenden Gleitrings 2 angeordnet.

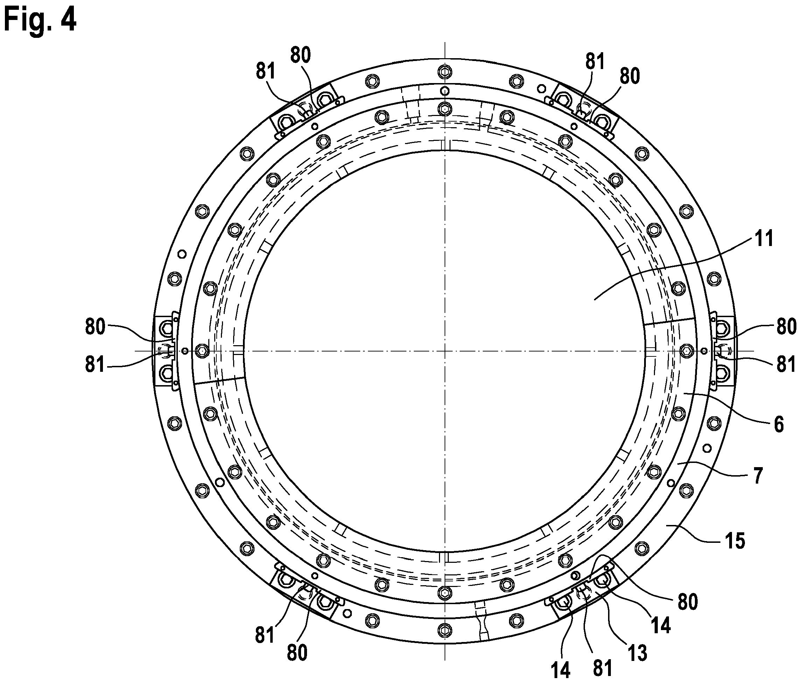

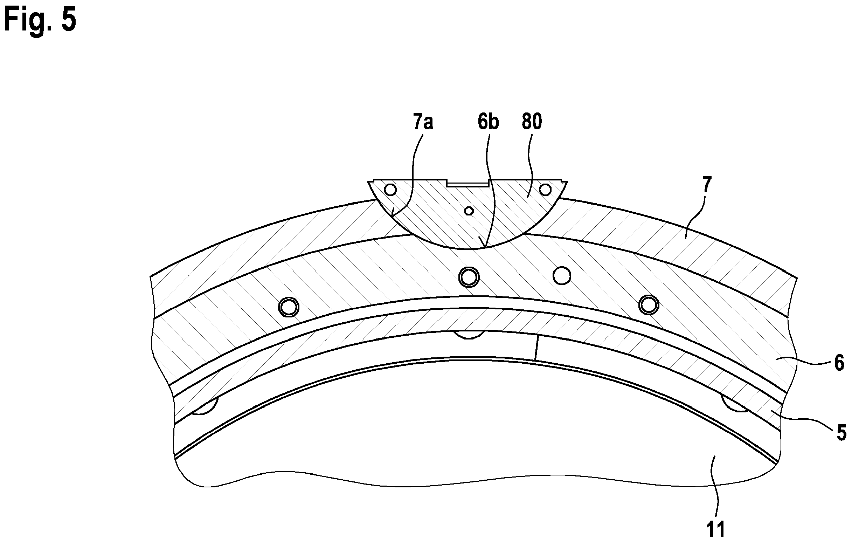

Schematisch ist in Fig. 3 ein Klemmbolzen 23 dargestellt, welcher den zweiten Haltering 22 an der Wellenhülse 12 fixiert. Wie weiterhin insbesondere aus den Fig. 3, 4 und 5 ersichtlich ist, umfasst die Fixiereinrichtung 8 eine Vielzahl von Scheiben 80 und Schraubbolzen 81, welche das ringförmige Gehäuse 7 am ringförmigen Deckel 6 fixieren. Hierbei weist das ringförmige Gehäuse 7 einen Durchgangsschlitz 7a auf und der ringförmige Deckel 6 einen nutförmigen Schlitz 6b auf. Die Scheibe 80 ist durch den Durchgangsschlitz 7a hindurchgeführt und in den bogenförmigen, nutförmigen Schlitz 6b im Deckel 6 eingeführt (vgl. Fig. 5). Wie aus Fig. 4 ersichtlich ist, sind entlang des Umfangs eine Vielzahl von Fixiereinrichtungen 8 vorgesehen, um eine sichere Fixierung des Gehäuses 7 am Deckel 6 zu ermöglichen.

Die Fixiereinrichtung 8 ist dabei mittels eines Sicherungsbolzens 82, welcher in Fig. 3 gezeigt ist, gesichert. Der Sicherungsbolzen 82 sichert die Scheibe 80 senkrecht zu einer Scheibenebene.

Zur Abdichtung zwischen dem Dichtungsgehäuse 15 und der Wellenhülse 12 ist eine umlaufende Elastomerdichtung 16 angeordnet (vgl. Fig. 2).

Weiterhin ist das ringförmige Gehäuse 7 mittels einer Spannpratze 13 und einem Spannbolzen 14 an einem Dichtungsgehäuse 15 der Maschine, beispielsweise einer Pumpe oder einer Turbine, fixiert. Hierbei sind ebenfalls entlang des Umfangs eine Vielzahl von Spannpratzen 13 und Spannbolzen 14 vorgesehen. Wie aus Fig. 4 ersichtlich ist, ist jede Spannpratze 13 dabei mittels zwei Spannbolzen 14 am Dichtungsgehäuse 15 fixiert.

Somit kann erfindungsgemäß eine Gleitringdichtungsanordnung 1 bereitgestellt werden, welche einen einteiligen rotierenden Gleitring 2 und einen einteiligen stationären Gleitring 3 aufweist. Ferner ist ein einteiliger Gleitringträger 5 zum Halten des stationären Gleitrings 3, ein einteiliger Deckel 6 und ein einteiliges Gehäuse 7 vorgesehen. Das Gehäuse 7 ist dabei vorzugsweise als Hohlzylinder einfach und kostengünstig herstellbar. Durch die einteilige Ausgestaltung insbesondere der drei Bauteile Gleitringträger 5, Deckel 6 und Gehäuse 7 wird sowohl eine Montage als auch eine Demontage deutlich vereinfacht.

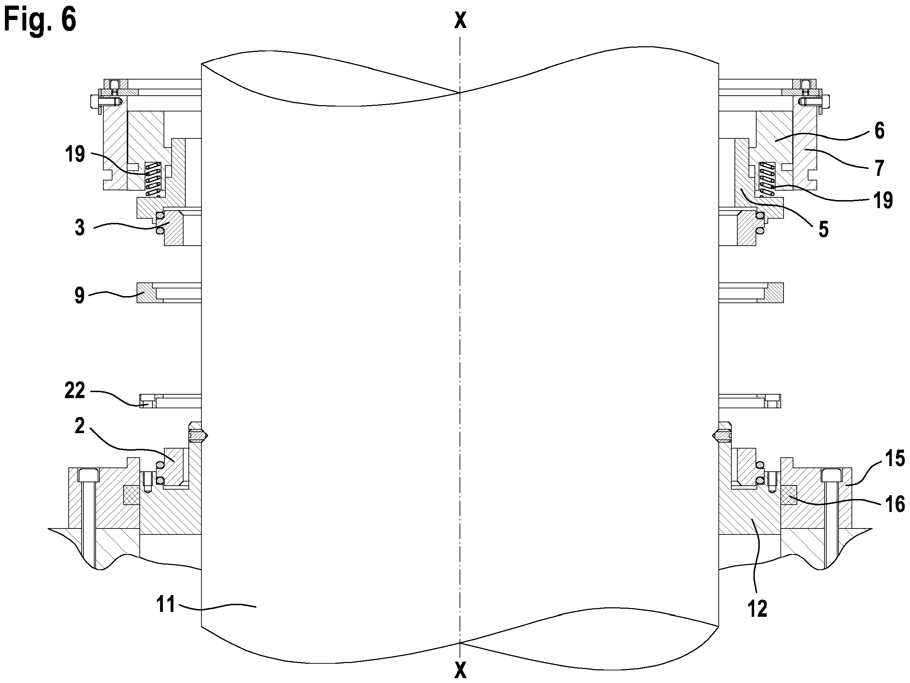

Die Fig. 6 zeigt einen Demontagevorgang in schematischer Weise. Ein Austausch der Gleitringe 2, 3 ist dabei möglich, ohne dass der Gleitringträger 5, der Deckel 6 und das ringförmige Gehäuse 7 vollständig demontiert werden müssen. Die drei Bauteile Gleitringträger 5, Deckel 6 und Gehäuse 7 können dabei in loser Weise in Axialrichtung über der Welle 11 angeordnet bleiben und werden beispielsweise mittels einer nicht gezeigten Hilfseinrichtung in Position gehalten. Die Demontage erfolgt dabei derart, dass zuerst die Spannpratzen 13 gelöst werden, wodurch das Gehäuse 7 mitsamt dem Deckel 6 vom Dichtungsgehäuse 15 abgehoben werden können.

Hierbei wird auch der Gleitringträger 5 angehoben, wobei gleichzeitig auch der mittels des ersten Halterings 9 am Gleitringträger 5 befestigte stationäre Gleitring 3 mit angehoben wird. Anschließend wird der erste Haltering 9 vom Gleitringträger 5 gelöst, was in Fig. 6 dargestellt ist. Somit liegt der stationäre Gleitring 3 frei.

Da alle Bauteile immer noch um die Welle 11 herum angeordnet sind, muss zur vollständigen Demontage des stationären Gleitrings 3 dieser zerstört werden. Anschließend kann als Ersatzteil nur ein stationärer Gleitring 3 montiert werden, welcher als sog. geteilter Ring vorgesehen ist. Vorzugsweise sind hierbei zwei Ringhälften mit jeweils einer Umfangslänge von 180° vorgesehen, welche in den Gleitringträger 5 eingesetzt werden können und dann mittels des ersten Halterings 9 wieder am Gleitringträger 5 fixiert werden können.

Ein Austausch des rotierenden Gleitrings 2 kann ebenfalls sehr einfach realisiert werden, indem einfach der zweite Haltering 22 von der Wellenhülse 12 gelöst wird, so dass der rotierende Gleitring 2 freiliegt. Dieser Zustand ist in Fig. 6 gezeigt. Anschließend muss der rotierende Gleitring 2 ebenfalls zerstört werden und kann nur durch einen geteilten rotierenden Gleitring wieder ersetzt werden. Dieser ist ebenfalls vorzugsweise mittels zweier Gleitringteile, die 180° umlaufen, vorgesehen.

Eine Montage erfolgt dabei wieder in umgekehrter Reihenfolge, d.h. zuerst wird der rotierende Gleitring 2 ersetzt und der neue rotierende Gleitring 2 mittels des zweiten Halterings 22 wieder an der Wellenhülse 12 fixiert. Anschließend wird der stationäre Gleitring 3 ersetzt und mittels des ersten Halterings 9 am Gleitringträger 5 fixiert. Anschließend erfolgt wieder eine Fixierung des Gehäuses 7 mittels der Spannpratzen 13 am Dichtungsgehäuse 15 und das Gehäuse 7 wird über die Scheibe 80 gesichert. Dadurch ist der Austausch der Gleitringe abgeschlossen.

Somit kann durch die vorliegende Erfindung das bisher verwendete sehr massive, mehrteilige Gehäuse ersetzt werden und insbesondere eine komplette Demontage der Gehäuse- und Haltebauteile des stationären Gleitrings bei einem Austausch der Gleitringe vermieden werden. Weiterhin kann eine Erstausrüstung der Maschine hierbei mit ungeteilten Gleitringen erfolgen, ein Austausch der Gleitringe muss dann jedoch jeweils immer mittels geteilter Gleitringe durchgeführt werden. Da der Gleitringträger 5, der Deckel 6 und das Gehäuse 7 einteilig ausgebildet sind, muss keine aufwendige Demontage dieser Bauteile erfolgen, so dass eine Vielzahl von Demontage- und Montageschritten entfallen. Ein weiterer großer Vorteil der erfindungsgemäßen einteiligen Ausbildung von Gleitringträger 5, Deckel 6 und Gehäuse 7 liegt darin, dass eine Störanfälligkeit aufgrund von Bauteiltoleranzen der mehrteiligen Ausgestaltung entfällt. Somit kann insbesondere bei hochbelasteten Gleitringen in Kraftwerken ein schneller und sicherer Wechsel ermöglicht werden, ohne dass dadurch lange Stillstandszeiten im Kraftwerk notwendig sind.

### Bezugszeichenliste

- 1: Gleitringdichtungsanordnung
- 2: rotierender Gleitring
- 2a: Klemmbereich
- 2b: Rückseite
- 3: stationärer Gleitring
- 3a: Klemmbereich
- 3b: Rückseite
- 4: Dichtspalt
- 5: Gleitringträger
- 6: Deckel
- 6a: Vorsprung
- 6b: nutförmiger Schlitz
- 7: ringförmiges Gehäuse
- 7a: Durchgangsschlitz
- 8: Fixiereinrichtung
- 9: erster Haltering
- 10: Gleitringdichtung
- 11: Welle
- 12: Wellenhülse
- 13: Spannpratze
- 14: Spannbolzen
- 15: Dichtungsgehäuse
- 16: Elastomerdichtung
- 17: Anschlagbolzen
- 18: Anschlagscheibe
- 19: Vorspannelement
- 20: Wurmschraube
- 21a, b, c, d: O-Ringe
- 22: zweiter Haltering
- 23: Klemmbolzen
- 24, 25: Spalt
- 80: Scheibe
- 81: Schraubbolzen
- 82: Sicherungsbolzen
- D1: maximaler Außendurchmesser des Deckels
- D2: minimaler Innendurchmesser des Gehäuses
- X-X: Mittelachse

## Patentansprüche

1. Gleitringdichtungsanordnung, umfassend:
- eine Gleitringdichtung (10) mit einem rotierenden Gleitring (2) und einem stationären Gleitring (3), welche zwischen sich einen Dichtspalt (4) definieren,
- einen einteiligen, ringförmigen Gleitringträger (5), welcher den stationären Gleitring (3) hält,
- einen einteiligen, ringförmigen Deckel (6), welcher am Gleitringträger (5) angeordnet ist, und
- einen einteiligen ersten Haltering (9), welcher lösbar am Gleitringträger (5) angeordnet ist,
- wobei der stationäre Gleitring (3) zwischen dem ersten Haltering (9) und dem Gleitringträger (5) geklemmt ist,
- wobei der Gleitringträger (5) mittels wenigstens eines elastischen Vorspannelements (19) derart mit dem Deckel (6) verbunden ist, dass der Gleitringträger (5) mitsamt dem stationären Gleitring (3) Bewegungen in Axialrichtung der Gleitringdichtungsanordnung ausführen kann, und **dadurch gekennzeichnet, dass**
- ein einteiliges, ringförmiges Gehäuse (7) lösbar mittels einer Fixiereinrichtung (8) am Deckel (6) fixiert ist und, dass
- ein maximaler Außendurchmesser (D1) des Deckels (6) kleiner ist als ein minimaler Innendurchmesser (D2) des Gehäuses (7).

2. Gleitringdichtungsanordnung nach Anspruch 1, wobei die Fixiereinrichtung (8) eine Scheibe (80) umfasst, wobei die Scheibe (80) durch einen Durchgangsschlitz (7a) im Gehäuse (7) und in einem nutförmigen Schlitz (6b) im Deckel (6) eingeführt und fixiert ist.

3. Gleitringdichtungsanordnung nach einem der vorhergehenden Ansprüche, wobei der stationäre Gleitring (3) einen radial nach außen vorstehenden, umlaufenden ersten Klemmbereich (3a) aufweist, an welchem der stationäre Gleitring (3) zwischen dem ersten Haltering (9) und dem Gleitringträger (5) geklemmt ist.

4. Gleitringdichtungsanordnung nach einem der vorhergehenden Ansprüche, wobei der rotierende Gleitring (2) zwischen einer Wellenhülse (12) und einem zweiten Haltering (22) geklemmt ist.

5. Gleitringdichtungsanordnung nach Anspruch 4, wobei der rotierende Gleitring (2) einen radial nach außen vorstehenden, umlaufenden zweiten Klemmbereich (2a) aufweist, an welchem der rotierende Gleitring (2) zwischen der Wellenhülse (12) und dem zweiten Haltering (22) geklemmt ist.

6. Gleitringdichtungsanordnung nach Anspruch 3, wobei am ersten Klemmbereich (3a) des stationären Gleitrings (3) zwei O-Ringe (21a, 21b) anliegen.

7. Gleitringdichtungsanordnung nach Anspruch 6, wobei der erste Klemmbereich (3a) an einer Seitenfläche des stationären Gleitrings (3) angeordnet ist, und der erste Klemmbereich (3a) in Axialrichtung der Gleitringdichtungsanordnung näher an einer Rückseite (3b) als einer Gleitfläche des stationären Gleitrings (3) angeordnet ist.

8. Gleitringdichtungsanordnung nach Anspruch 4 oder 5, wobei am zweiten Klemmbereich (2a) des rotierenden Gleitrings (2) zwei O-Ringe (21c, 21d) anliegen.

9. Gleitringdichtungsanordnung nach Anspruch 8, wobei der zweite Klemmbereich (2a) an einer Seitenfläche des rotierenden Gleitrings (2) angeordnet ist, und der zweite Klemmbereich (2a) in Axialrichtung der Gleitringdichtungsanordnung näher an einer Rückseite (2b) als an einer Gleitfläche des rotierenden Gleitrings (2) angeordnet ist.

10. Maschine, insbesondere Pumpe oder Turbine eines Kraftwerks, umfassend eine Gleitringdichtungsanordnung nach einem der vorhergehenden Ansprüche.

## Claims

1. A mechanical seal arrangement comprising:
- a mechanical seal (10) comprising a rotating slide ring (2) and a stationary slide ring (3) defining a seal gap (4) therebetween,
- a one-piece, ring-shaped slide ring carrier (5) which holds the stationary slide ring (3)
- a one-piece, ring-shaped cover (6), which is arranged on the slide ring carrier (5) and
- a one-piece first retaining ring (9), which is detachably arranged on the slide ring carrier (5),
- wherein the stationary slide ring (3) is clamped between the first retaining ring (9) and the slide ring carrier (5),
- wherein the mechanical slide carrier (5) is connected to the cover (6) by means of at least one elastic biasing element (19) such that the slide ring carrier (5) can perform movements in the axial direction of the mechanical seal arrangement together with the stationary slide ring (3) and
**characterized in that**
- a one-piece, ring-shaped housing (7), is detachably fixed to the cover (6) by means of a fixing device (8) and
- that a maximum outside diameter (D1) of the cover (6) is smaller than a minimum inside diameter (D2) of the housing (7).

2. The mechanical seal arrangement according to claim 1, wherein the fixing device (8) comprises a washer (80), said washer (80) being inserted and fixed through a through slot (7a) in the housing (7) and in a groove-shaped slot (6b) in the cover (6).

3. The mechanical seal arrangement according to one of the preceding claims, wherein the stationary slide ring (3) comprises a first clamping area (3a) projecting outwards in a radial and circumferential manner at which the stationary slide ring (3) is clamped between the first retaining ring (9) and the slide ring carrier (5).

4. The mechanical seal arrangement according to one of the preceding claims, wherein the rotating slide ring (2) is clamped between a shaft sleeve (12) and a second retaining ring (22).

5. The mechanical seal arrangement according to claim 4, wherein the rotating mechanical ring (2) comprises a second clamping area (2a) projecting outwards in a radial and circumferential manner at which the rotating slide ring (2) is clamped between the shaft sleeve (12) and the second retaining ring (22).

6. The mechanical seal arrangement according to claim 3, wherein two O-rings (21a, 21b) abut the first clamping area (3a) of the stationary slide ring (3).

7. The mechanical seal arrangement according to claim 6, wherein the first clamping area (3a) is disposed on a side surface of the stationary slide ring (3), and the first clamping area (3a) is disposed closer to a rear surface (3b) than a sliding surface of the stationary slide ring (3) in an axial direction of the mechanical seal arrangement.

8. The mechanical seal arrangement according to claims 4 or 5, wherein two O-rings (21c, 21d) abut the second clamping area (2a) of the rotating slide ring (2).

9. The mechanical seal arrangement according to claim 8, wherein the second clamping area (2a) is disposed on a side surface of the rotating slide ring (2), and the second clamping area (2a) is disposed closer to a rear surface (2b) than to a sliding surface of the rotating slide ring (2) in an axial direction of the mechanical seal arrangement.

10. A machine, in particular a pump or turbine of a power plant, comprising a mechanical seal arrangement according to one of the preceding claims.

## Revendications

1. Ensemble d'étanchéité à bagues de glissement comprenant :
- un joint d'étanchéité à bagues de glissement (10) avec une bague de glissement (2) rotative et une bague de glissement (3) fixe qui définissent entre elles une fente étanche (4),
- un support de bague de glissement (5) annulaire d'un seul tenant qui maintient la bague de glissement (3) fixe,
- un couvercle (6) annulaire d'un seul tenant qui est agencé au niveau du support de bague de glissement (5),
- une première bague de retenue (9) d'un seul tenant qui est agencée de manière détachable au niveau du support de bague de glissement (5),
- dans lequel la bague de glissement (3) fixe est serrée entre la première bague de retenue (9) et le support de bague de glissement (5),
- dans lequel le support de bague de glissement (5) est relié au moyen d'au moins un élément de précontrainte (19) élastique au couvercle (6) de telle manière que le support de bague de glissement (5) puisse réaliser avec la bague de glissement (3) fixe des mouvements dans le sens axial de l'ensemble d'étanchéité à bagues de glissement, et **caractérisé en ce que**
- un boîtier (7) annulaire d'un seul tenant est fixé de manière détachable au moyen d'un dispositif de fixation (8) au couvercle (6) et, que
- un diamètre extérieur (D1) maximal du couvercle (6) est inférieur à un diamètre intérieur (D2) minimal du boîtier (7).

2. Ensemble d'étanchéité à bagues de glissement selon la revendication 1, dans lequel le dispositif de fixation (8) comporte un disque (80), dans lequel le disque (80) est introduit et fixé par une fente débouchante (7a) dans le boîtier (7) et dans une fente (6b) en forme de rainure dans le couvercle (6).

3. Ensemble d'étanchéité à bagues de glissement selon l'une quelconque des revendications précédentes, dans lequel la bague de glissement (3) fixe présente une première zone de serrage (3a) périphérique dépassant radialement vers l'extérieur, à laquelle la bague de glissement (3) fixe est serrée entre la première bague de retenue (9) et le support de bague de glissement (5).

4. Ensemble d'étanchéité à bagues de glissement selon l'une quelconque des revendications précédentes, dans lequel la bague de glissement (2) rotative est serrée entre une chemise d'arbre (12) et une deuxième bague de retenue (22).

5. Ensemble d'étanchéité à bagues de glissement selon la revendication 4, dans lequel la bague de glissement (2) rotative présente une deuxième zone de serrage (2a) périphérique, dépassant radialement vers l'extérieur, à laquelle la bague de glissement (2) rotative est serrée entre la chemise d'arbre (12) et la deuxième bague de retenue (22).

6. Ensemble d'étanchéité à bagues de glissement selon la revendication 3, dans lequel deux joints toriques (21a, 21b) reposent contre la première zone de serrage (3a) de la bague de glissement (3) fixe.

7. Ensemble d'étanchéité à bagues de glissement selon la revendication 6, dans lequel la première zone de serrage (3a) est agencée au niveau d'une surface latérale de la bague de glissement (3) fixe, et la première zone de serrage (3a) est agencée dans le sens axial de l'ensemble d'étanchéité à bagues de glissement plus près d'un côté arrière (3b) que d'une surface de glissement de la bague de glissement (3) fixe.

8. Ensemble d'étanchéité à bagues de glissement selon la revendication 4 ou 5, dans lequel deux joints toriques (21c, 21d) reposent contre la deuxième zone de serrage (2a) de la bague de glissement (2) rotative.

9. Ensemble d'étanchéité à bagues de glissement selon la revendication 8, dans lequel la deuxième zone de serrage (2a) est agencée au niveau d'une surface latérale de la bague de glissement (2) rotative, et la deuxième zone de serrage (2a) est agencée dans le sens axial de l'ensemble d'étanchéité à bagues de glissement plus près d'un côté arrière (2b) que d'une surface de glissement de la bague de glissement (2) rotative.

10. Machine, en particulier pompe ou turbine d'une centrale électrique comprenant un ensemble d'étanchéité à bagues de glissement selon l'une quelconque des revendications précédentes.
